# EUROPEAN PATENT SPECIFICATION

(11) **EP 0 489 975 B1**
(45) Date of publication and mention of the grant of the patent: **24.08.1994**
(21) Application number: 90203249.9
(22) Date of filing: 11.12.1990
(51) Int. Cl.: F01P 11/12, B01D 46/26, B01D 46/42

(54) **Filter element cleaning arrangement**
Reinigungsvorrichtung für ein Filterelement
Dispositif de nettoyage pour un élément de filtre

(43) Date of publication of application: 17.06.1992
(73) Proprietor: NEW HOLLAND BELGIUM N.V., B-8210 Zedelgem (BE)
(72) Inventor: Vergote, Geert R.J., B-8870 Izegem (BE); Witdoek, Daniel C., B-8830 Hooglede (BE)
(74) Representative: Vandenbroucke, Alberic

(56) References cited:
- EP-A- 0 269 765
- DE-A- 2 156 957
- DE-C- 453 597
- US-A- 2 732 912
- PATENT ABSTRACTS OF JAPAN vol. 8, no. 12 (M-269)(1449) 19 January 1984, & JP-a-58 174115 (NISSAN JIDOSHA) 13 October 1983

## Description

This invention relates to an air filtering arrangement which can generally be applied to many different devices which have to operate in an atmosphere which besides dry foreign matter, such as dust, chaff, short straw particles, etc., also contains damp and gluey particles and in which air from this athmosphere has to pass through relatively small openings in an element of the filtering arrangement to hold back this foreign matter on the one hand, but whereby there is a danger of the openings becoming blocked if no special precautions are taken on the other hand. Such an air filtering arrangement can, for example, be used with cooling devices for combustion engines or hydraulic equipment.

One particular application of the present invention is that of harvesting machines, such as combine harvesters, since these machines, when harvesting e.g. wheat or barley, normally work in a very dusty atmosphere as they can only harvest efficiently when the whole crop is ripe and dry, whereby, during operation, a considerable amount of dust, chaff and short straw particles are displaced in the vicinity of the machine. Harvesting other crops however, especially corn, requires only the ears of corn to be ripe and dry, while the cornstalks still may stand green and succulent as they usually are not processed through the harvesting machine but instead are comminuted thereby and left in the field. In chopping the cornstalks, sap thereof is beaten out generating clouds of damp, sticky particles. Occasionally, in addition, the ears of corn are infested e.g. by fungous diseases, resulting in a gluey powder to be spread into the air when stripping said ears from the cornstalks.

Whilst the use of a filter element prevents all this foreign matter in the atmosphere around the harvesting machine from reaching the device being cooled, for example the radiator through which the coolant for a combustion engine flows, it is necessary to prevent that same foreign matter blocking the filter element itself and thereby interrupting the flow of air to the cooling device and causing overheating.

It is known from EP-A-0.269.765 to remove foreign matter from a rotary filter element by relying partially on gravity and centrifugal forces. In the arrangement disclosed, the filter element is rotatably mounted and on the side thereof opposite to that through which air enters the filter element, there is provided a stationary means such as a plate, which serves to blank off a given area of the filter element as the latter rotates. Thus, any foreign matter collected on the area blanked off by the plate at any given instant is no longer held by the flow of air through the filter element and can thus fall free of the latter under gravity and centrigugal forces. In order to discharge the dislodged foreign matter at a location remote from the filter element, a duct is provided exteriorly thereof which is open in the region of the blanking off plate. The fan, operable to draw air through the filter element, generates a flow of pressurized air in said duct by virtue of the latter having its inlet opening at the pressure side of the fan. Any foreign matter falling free from the filter element in the predetermined region is captured by the pressurized air flow and is discharged at a remote location from the filter element.

Whilst a rotary air filter of the type above has been found satisfactory in conditions where foreign matter adheres exclusively to the outer surface of the filter element, it also has been experienced that said arrangement is unable to clean the internal space of the filter perforations expecially when they are clogged with sticky particles. Indeed, neither gravity nor centrigual forces are strong enough to expel foreign matter which firmly clings to the filter element. Also, since the flow of presurized cleaning air is directed parallel to the filter screen, the inside of the perforations neither can be reached thereby.

Another air filter, disclosed in DE-B-453.597 which forms the basis for the preamble of claim 1, is similar to that of EP-A-0.269.765 to the extent that blanking off plates are employed for removing foreign matter from the filter element. In this arrangement however, brush elements in addition are operable to wipe off the outer surface of the filter screen, without intending or succeeding to clean the perforations provided therein. In fact, foreign particles nevertheless released from the perforations by the action of the brush elements, are carried along with the cooling air into the inside of the cooling arrangement and are likely to collect e.g. on the radiator which ultimately will perform inefficiently as a result thereof.

It is also known from an embodiment shown in DE-B-2.841.052 to clean a filter element by forcing air through it in the opposite direction to the flow of air to be filtered. For this purpose, air under pressure is collected on the pressure side of the cooling fan, said air being transmitted through a duct to a nozzle, which further directs the air through the filter element in a generally radial direction. In this manner, dust particles which have managed to reach the inner surface of the filter screen are forced back through the filter perforations and are removed from the filter element. Yet, the generated flow of air is unsuccessful to eject damp and gluey particles from clogged perforations, as this would require the use of high-pressure air, such as generated by high-pressure cleaning equipment for example.

It is therefore the objective of the present invention to provide a filter element cleaning arrangement which overcomes the aforedescribed shortcomings and drawbacks and which ensures a thorough cleaning of the filter element by means of a simple and carefree construction.

According to the present invention, there is provided an air filtering arrangement comprising :
- a perforate filter element;
- a fan operable to urge air, which is contaminated with foreign matter, in a given direction through the filter element from an upstream side to a downstream side thereof; said filter element being operable to restrain said foreign matter as said air passes through the perforations thereof;
- filter element cleaning means comprising rotatable brush means provided in cleaning engagement with a section of the filter element for releasing foreign matter restrained thereby; and
- drive means for, in use, varying the relative position of the filter element with respect to the brush means such that other sections of the filter element successively are exposed to the brush means; and
which is characterized in that :
the brush means are positioned at the downstream side of the filter element and are operable to pierce through said perforations thereof in a direction opposite to said given direction whereby foreign matter, collected in said perforations, is expelled towards the upstream side of the filter element.

Preferably, the fan is positioned at the downstream side of the filter element and therefore is operable to draw in air through the perforations provided therein. Blanking off means may be provided closely adjacent this side of the filter element for blanking off the perforations thereof over a predetermined region so as to obstruct the passage therethrough of air to be filtered whereby foreign matter collected on the opposite surface of the perforate filter falls free therefrom. In combination with the blanking off means, duct means may be provided in the vicinity of the filter element at this opposite side thereof and which are open in the region of said blanking off means for exposing the filter element to a cleaning air blast captured at the pressure side of the fan.

In this combination, the brush means preferably are arranged immediately in front of the blanking off means when seen in the direction of movement of the filter element; said brush means being urged against the facing surface of the perforate filter in order to force the bristles of the brush means through the perforations for expelling any foreign matter collected therein.

An air filtering arrangement in accordance with the present invention will now be described, by way of example, with reference to the accompanying drawings, in which :
Figure 1 is a schematic side view of a combine harvester having an air filtering arrangement in accordance with the present invention,
Figure 2 is a sectional view of the cooling system of the combine harvester of Figure 1, and
Figure 3 is a front view, partially in section, of Figure 2, i.e. in the direction of arrow III of Figure 2.

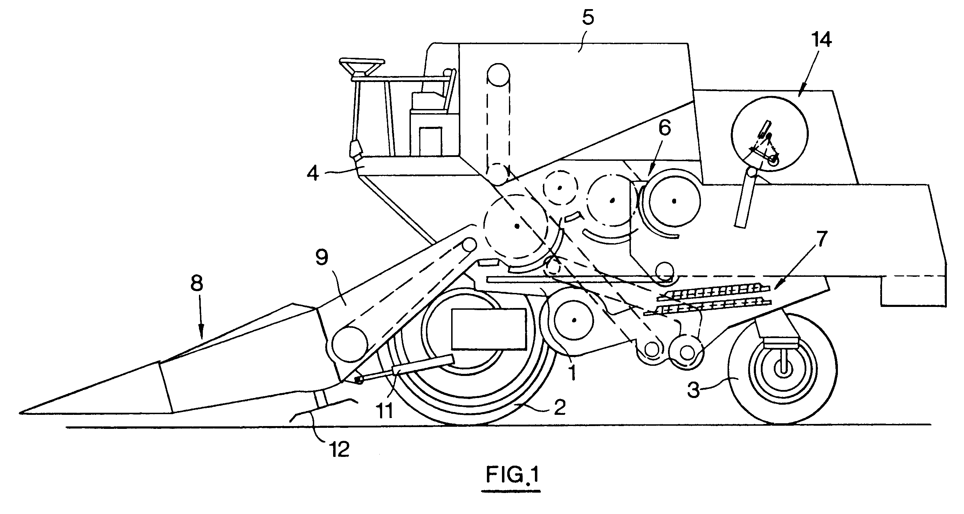

Referring first to Figure 1, the combine harvester on which the air filtering arrangement of the present invention is applied, is of generally known form and comprises a main chassis or frame 1 supported on a front pair of drive wheels 2 and a rear pair of steerable wheels 3. Supported on the main chassis 2 are an operator's platform 4, a grain tank 5, a threshing and separating mechanism indicated generally at 6, a grain cleaning mechanism indicated generally at 7, and an engine (not shown). A corn header 8 and elevator housing 9 extend forwardly of the main chassis 1 and the header is pivotably secured to the chassis for generally vertical movement which is controlled by extensible hydraulic cylinders 11.

As the combine harvester is propelled forwardly over a field with standing row crop, such as corn, the corn header 8 separates the ears of corn from the corn stalks and the former are conveyed to the elevator housing 9 which supplies them to the threshing and separating mechanism 6 for further processing. The corn stalks, stripped from their ears, are comminuted by a cutter device 12 provided underneath the corn header 8 and are left on the field.

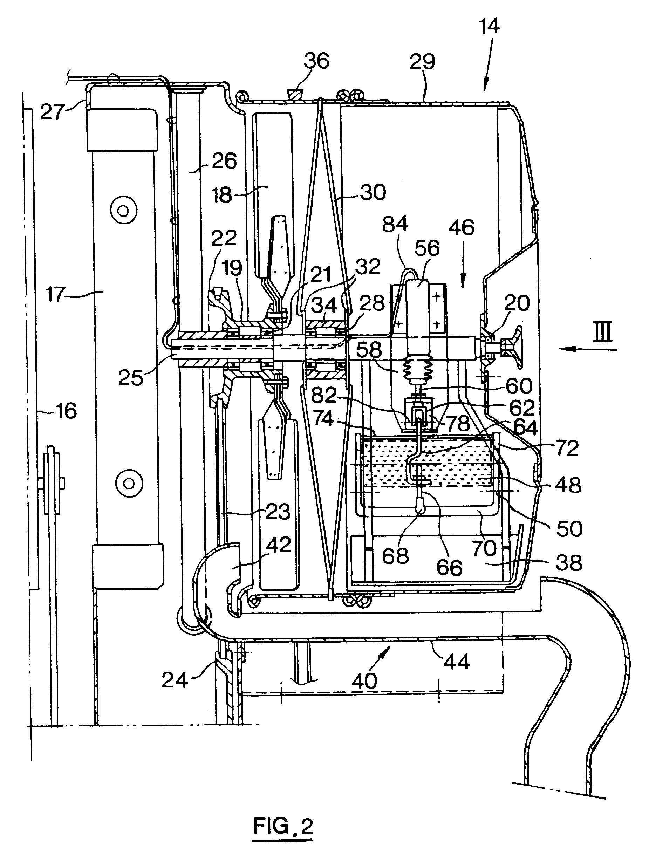

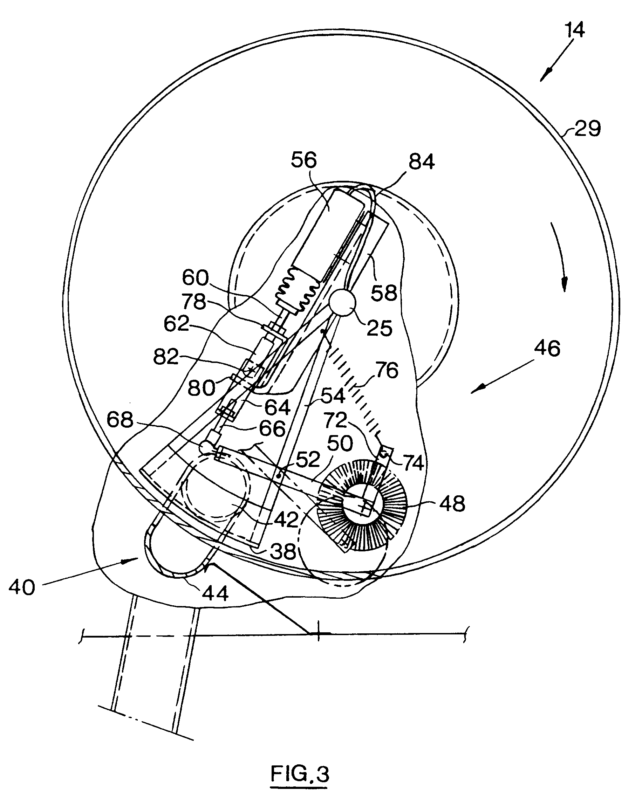

The combine harvester further comprises a rotary air filter or screen indicated generally at 14 and illustrated in greater detail in Figures 2 and 3 of the drawings. Referring now to Figures 2 and 3, the rotary air filter 14 forms part of a cooling system for the internal combustion engine of the combine harvester of which only the engine block 16 is illustrated schematically in Figure 2. The cooling system comprises a radiator 17 which is disposed with the engine block 16 at one side thereof and with a cooling fan 18 at the opposite side thereof. The cooling fan 18 is mounted on one end of a collar 19 with the other end of the collar 19 being provided with a pulley 22 which is driven by a belt 23 from a further pulley 24 in order to impart rotational drive to the cooling fan 18. To this end the collar 19 is mounted for rotation, via bearings 21, on a stationary shaft 25 which itself is supported via a support frame 26 provided in a radiator housing 27. The rotary air screen of filter 14 is mounted for rotation on said shaft 25 via bearings 20 and 28 and comprises a filter element 29 in the form of a cylinder which is open at one end facing the radiator 17 and which is closed at the opposite end. The fan 18 is mounted within the cylindrical filter element 29 adjacent its open end. The filter element 29 is imperforate at its closed end but perforate around its periphery for at least a portion of its axial length. Spokes 30, connected to flanges 32 of a hub 34, are operable to rotatably support the filter element 29 on the stationary shaft 25. Rotational drive of the filter element 29 is obtained by a belt 36 engaging the cylindrical surface thereof, thereby rotating the filter 29 at a rotational speed in the range of 200 RPM for example.

A stationary blanking off plate 38 is provided within the filter element 29 on the aforementioned shaft 25 in a manner so as to be closely adjacent a region of the perforate periphery of the filter element 29. It will be seen from Figure 3 that, in a preferred embodiment, this plate 38 extends over an arc of approximatley 30°, thus preventing cooling air from flowing through the filter element 29 over that arc at the perforate periphery thereof. Accordingly, any dust, short particles of leaves or other foreign matter collected on the outer surface of the air filter 29 at that blanked off portion in use of the air filtering arrangement tend to fall loose of the filter element due to gravity forces and eventually also centrifugal forces whereafter this foreign matter can readily be removed. To this end, a pneumatic foreign matter evacuation system or "blow-off" system is provided. This system comprises duct means 40 which is curved so that the open end 42 thereof is directed towards, and positioned adjacent, the pressure side of the cooling fan 18, whereby the latter provides a source of pressurized air which flows through the duct 40. A portion 44 of the duct means 40 extends closely beneath the filter element 29 and is open at its top in the region of the blanking off plate 38. In use, foreign matter that has accumulated on the perforate surface of the filter element 29 and that tends to fall loose beneath the blanking off plate 38 in a manner as already described, is picked up by the localized pressurized air flow and is discharged thereby at a remote location from the rotary air screen. For more details on this blow-off system, reference is made to EP-A-0.269.765, already mentioned.

It has been experienced however that under certain adverse operating conditions of the combine harvester, foreign matter not only tends to accumulate on the outer periphery of the perforate surface of the air screen 29, but moreover also tends to creep into the perforations provided therein, as such forming bridges therein and ultimately closing off the perforations completely. As a result, the air screen 29 starts to choke up whereby the cooling efficiency of the combine harvester engine is greatly reduced. The adverse operating conditions referred to hereabove are likely to occur when harvesting corn of which the ears are infested e.g. by fungous disease, which leaves a black, sticky powder on the husk. During harvesting operation, when the ears are stripped from the corn stalks, a large amount of this powder becomes airborne, forming clouds of particles enveloping the combine harvester.

It will be appreciated that, since the fan 18 of the engine cooling system draws in air from the immediate surroundings of the harvester, this cooling air inevitably is contaminated with said sticky particles. As the latter are smaller in size than the perforations provided in the filter element 29, lots of these particles are not retained by the outer surface of the filter 29 but are instead carried along with the cooling air into the perforations. Due to their gluey characteristics, and as a result of collisions against the side walls of the perforations, those particles tend to adhere thereto, whereby the free passage of air through the perforations is reduced. In a further stage, particles start to stick to each other, after a while, fill up the perforations completely to the extent that air is prevented from flowing therethrough.

The above depicted phenomenon also happens to occur when corn is harvested of which the ears are ripe and dry while the corn stalks are still unripe and green. In chopping those cornstalks with the cutter device 12 underneath the corn header 8, sap of the stalks is smashed thereout by the vigorous action of the cutter knives thereon, forming a haze of liquid particles through which the combine harvester is driving. Said particles, by their nature, equally are rather gluey and as such also effect a rapid clogging of the air filter 29 when air thereby polluted is drawn through the perforations of said filter 29.

It is evident that a clogged air filter is highly ineffective and undesirable in that it can cause overheating of the combine harvester engine. Precautions thereagainst, such as the already described blanking off plate 38 or the blow-off system 40, have proven to provide minimal effect when the obstruction of the air filter 29 is concentrated inside the perforations and not on the outer surface of the filter. Indeed, the advantageous effect of the blanking off plate 38 is mainly based on the gravity forces succeeding to loosen foreign matter collected on the outer surface of the air filter 29. However, gravity forces alone are not sufficiently strong to extract the sticky particles from the perforations. Also the blow-off system 40 is unable to clear the filter element 29, as the flow of pressurized air generated in the duct 40 is oriented parallel to the outer surface of the filter 29, thus having no effect whatsoever on the hidden obstructions inside the perforations.

A solution to this problem is provided by a filter element cleaning means 46 comprising a brush 48, rotatably mounted parallel to the perforate portion of the filter element 29 and at the inner side thereof, when seen in the direction of normal air flow therethrough. A pair of lever arms 50, hingeably connected at 52 to the retaining members 54 of the blanking off plate 38, is operable to support the brush 48 either in an inoperative position as shown in full lines in Figure 3 or in an operative position shown in dashed lines in the same Figure. A solenoid 56 is attached to a mounting member 58, in turn fixedly secured to the stationary shaft 25. The plunger side of the solenoid 56 is provided with a threaded rod 60 which adjustably receives a bifurcated connector 62, the open end of which hingeably holds a hook-shaped member 64. A further threaded rod 66 is adjustably connected at one side to the hook-shaped member 64, while the other side is attached, via a ball-and-socket joint 68, to a cross member 70 which links the arms 50 to each other. At the brush supporting end of the arms 50, two upright brackets 72 are welded thereto, holding inbetween a rod 74 which extends parallel to the brush 48. A tension spring 76 is provided between an anchor point on the mounting member 58 and the rod 74, at a portion halfway thereof.

When the solenoid 56 is not energized, the spring 76 is able to swivel the brush 48 on its supporting arms 50 around their pivots 52 to its inoperative position clear from the perforate portion of the filter element 29. Any further movement away from the filter 29 is prevented by an angled member 78, firmly connected to the rod 60 of the solenoid 56 and which abuts against an extending flange 80 of the mounting member 58.

Upon energizing the solenoid 56 by means to be described furtheron, the threated rod 60 is retracted to some degree into the solenoid body in a straight line. Hence also the bifurcated connector 62 is subjected to this linear movement, resulting in all intermediate members 64, 66 and 68 to swivel the levers 50 in a clockwise direction as seen in Figure 3, whereby the brush 48 is urged into its operative position against the filter element 29. It readily will be appreciated that the hook-shaped member 64 and the threaded rod 66 are not moved in a linear path since the levers 50 are pivoted around their fulcrum 52. To intercept this discrepancy in movements, the member 64 is hingeably attached at the bifurcated connector 62 by a hinge 82 which extends parallel to the hinge axis 52 of the levers 50.

In order to ensure that the connecting members between the solenoid 56 and the levers 50 are always assembled in a correct manner i.e. with the bifurcated connector 62 always facing in a same direction having its hinge 82 parallel to the hinge axis 52, an elongated recess is provided in the extending flange 80 of the mounting members 58. As such, the hook-shaped member 64 can only enter the recess with its smallest side up front, as seen in Figure 2, and thus consequently the bifurcated connector 62 must be positioned correctly to be able to make the connection.

As the filter element 29 is constantly rotating during operation of the combine harvester, rotational power is transmitted to the brush 48 in contact therewith, which starts spinning at an elevated RPM, considering the ratio of the diameters of the filter screen 29 on the one hand and the brush 48 on the other hand.

The bristles of the brush 48 are of a size able to pierce through the perforations in de filter element 29 without running the risk of getting stuck therein. In piercing through, the foreign particles accumulated in the perforations are repelled in the direction opposite to the direction in which they entered. As the blanking off plate 38 is positioned immediately behind the brush 48 when seen in the direction of rotation of the screen 29, the repelled particles are not given a chance to be sucked in again by the fan 18, but instead are received in the blow-off duct 44 and evacuated from the vicinity of the screen 29 and, provided the brush 48 is constructed according to some specific requirements, only a few revolutions of the screen 29 are imperative to clean the same.

What the construction of the brush 48 is concerned, lightweight synthetic materials are applied to keep the weight as low as possible for reasons to avoid slip of the screen 29 on the brush 48 which would lead to excessive wear of the brush bristles. In the same connection, low friction bearings aligned with respect to each other are used to freely rotatably support the brush 48 on the lever arms 50. The bristles of the brush 48 should meet two almost contradicting requirements : on the one hand being wear-resistant and strong, but on the other hand being very flexible. In a preferred embodiment the bristles are formed by nylon fibres which are attached to a hollow plastic core. To improve the cleaning efficiency, the amount of bristles must be chosen in relation to the amount of perforations instantaneously presented to the brush 48. Indeed, if the outer surface of the brush 48 is too dense, then the brush will act as a near rigid structure and the bristles, which have to enter the perforations, will experience great difficulty to do so. In the opposite case however, if too few bristles are provided, the brush 48 will be too flexible and all the bristles will bend, without entering the perforations.

As already mentioned, the brush 48 need not to be in constant engagement with the filter element 29 for satisfactorily cleaning the same. Therefore, in order to prolong the lifetime of the brush 48 and to reduce power consumption of the rotary air filter drive, provisions are made for only periodically energizing the solenoid 56 and thus subjecting the filter 29 to an intermittent cleaning action. To this end, the solenoid 56 is connected to a low voltage electric source (not shown) by means of wires 84, which are suitably guided through a central bore in the shaft 25 for not impeding the operation of rotating elements thereon. Control means (not shown) are included in the electric circuit comprising the electric source and the solenoid 56; the control means being operable to intermittently energize and deenergize the solenoid 56 for moving the brush 48 respectively in and out of engagement with the filter element 29.

In a very simple embodiment, the control means may take the form of an electric switch, mounted within reach of the operator on the platform 4. Although such a system undeniably has the advantage of being cheap, it nevertheless suffers from the disadvantage that the operator is likely to forget to manually switch the filter element cleaning means 46 on or off at timely intervals. In the former case he will be driving on for longer periods without noticing that the filter element 29 gradually becomes clogged, resulting in the engine starting to overheat. In the latter case however, the brush 48 will wear faster, reducing the lifetime thereof.

To avoid the foregoing from happening, a preferred embodiment is employed wherein the control means are automatically actuated at regular intervals, without any determined action from the part of the operator being required. Said control means comprises an electric switch (not shown), provided underneath the operator's platform 4, which is operatively coupled to the engagement lever (equally not shown) of the graintank unloading tube. A timer mechanism (not shown) is also integrated in the electric circuit of the solenoid 56.

In operation, the graintank 5 is gradually filling while the combine harvester is driven over the field. To unload the graintank 5 through the unloading tube into a grain trailer or truck, the operator manipulates the lever to engage the unloading tube drive. By the same action, the electric switch underneath the platform 4 is actuated, whereby electric current is provided to the solenoid 56 and consequently the brush 48 is brought into engagement with the filter 29 for starting its cleaning operation. The timer mechanism ensures that, following the energizing of the solenoid 56, the current supply to this solenoid 56 is interrupted after a predetermined period of time and irrespective of the position of the lever for engaging the unloading tube drive. As during normal operation, the graintank regularly has to be emptied (i.e. in the order of each half hour for example), not enough time is provided to the flow of polluted cooling air to clog the filter screen 29 beyond an acceptable level between two successive cleaning operations. As such, an optimal effect of the cooling system is guaranteed.

The timer mechanism referred to hereabove preferably takes the form of an electronic circuit of which the operating time can be adjusted according to the needs. In this respect, it has been experienced that, in most conditions, the timer mechanism may cut the current to the solenoid 56, thereby disengaging the brush 48 from the screen 29, already after a few seconds, since, as mentioned before, only a few revolutions of the screen 29 with the brush 48 in engagement are needed to remove the foreign particles from the perforations therein. All this implies that, during a full harvesting day, the brush 48 becomes operational for a reduced period of time only which nevertheless is sufficient to safeguard the free flow of cooling air through the perforated screen 29. By the same token, the lifetime of the brush 48 is increased considerably.

It will be appreciated by a person skilled in the art that the control means for initiating the operation of the brush 48 operatively may be coupled to another control mechanism besides the graintank unloading device, provided said control mechanism is actuated at regular intervals during the harvesting operation. One further example of such a control mechanism is found in the header height adjustment lever (not shown) as indeed said lever is manipulated frequently for raising the header when the combine harvester starts driving on the headlands.

It also will be appreciated that besides the measures already taken, still further steps may be taken to prolong the lifetime of the brush 48. One such step consists of ensuring that the inner surface of the perforate screen 29 against which the brush 48 is rubbing, is made as smooth as possible. This is accomplished by taking account of the punch direction during manufacture of the perforations in the screen 29. More specifically, the screen 29 should be assembled such that said punch direction is oriented from the inside of the screen 29 to the outside thereof, so that any serrated bulges, resulting from the punch operation, are located at the outer surface of the screen 29.

In an alternative embodiment, the blow-off duct 40 may be omitted without seriously decreasing the cleaning efficiency of the brush 48. In this event, evacuation of the expelled particles from the filter 29 solely depends on gravity forces experienced underneath the blanking off plate 38. Also the latter may be left out from the filter arrangement, although this would demand much longer engagement periods of the brush 48 to keep the filter 29 clean, as particles expelled from the perforations are more likely to be sucked in again immediately behind the brush 48, as seen in the direction of rotation of the filter 29.

In case the friction between the brush 48 and the surface of the filter 29 is kept sufficiently low during the cleaning operation, then the spokes 30, which support the filter 29, advantageously may be substituted by a set of turbine blades; these blades being acted upon by the flow of cooling air drawn through the filter by the cooling fan 18, thus rotating the filter at a relatively low rotational speed.

## Claims

1. An air filtering arrangement comprising :
- a perforate filter element (29);
- a fan (18) operable to urge air, which is contaminated with foreign matter, in a given direction through the filter element (29) from an upstream side to a downstream side thereof; said filter element (29) being operable to restrain said foreign matter as said air passes through the perforations thereof;
- filter element cleaning means (46) comprising rotatable brush means (48) provided in cleaning engagement with a section of the filter element (29) for releasing foreign matter restrained thereby; and
- drive means (36/.) for, in use, varying the relative position of the filter element (29) with respect to the brush means (48) such that other sections of the filter element successively are exposed to the brush means (48); and
characterized in that :
the brush means (48) are positioned at the downstream side of the filter element (29) and are operable to pierce through said perforations thereof in a direction opposite to said given direction whereby foreign matter, collected in said perforations, is expelled towards the upstream side of the filter element (29).

2. An air filtering arrangement according to claim 1 characterized in that the fan (18) and the brush means (48) are positioned at the same side of the filter element (29); the fan (18) being operable to draw air therethrough.

3. An air filtering arrangement according to claim 2 characterized in that :
- blanking off means (38) are provided closely adjacent the filter element (29) at the side thereof facing in the direction of the fan (18) for blanking off the perforations in this filter element (29) over a predetermined region so as to obstruct the passage therethrough of air to be filtered, and
- the brush means (48) are positioned closely adjacent the blanking off means (38).

4. An air filtering arrangement according to claim 3 characterized in that :
- the filter element (29) is rotatably driven by the drive means (36/.);
- the blanking off means (38) are stationary and, in use, blank off successive sections of the filter element (29); and
- the brush means (48), in use, are stationarily positioned upstream of the blanking off means (38) when seen in the direction of rotation of the filter element (29).

5. An air filtering arrangement according to claim 3 or 4 characterized in that :
- the filter element (29) is generally cylindrical in shape and is perforate around its periphery for at least a portion of its axial length;
- the fan (18) is operable to draw air to be filtered from outside the filter element (29) through said filter element (29) to the inside thereof ;
- the blanking off means (38) are provided stationarily within the filter element and extend over an arc of, and closely adjacent the perforate periphery of the filter element (29); and
- the brush means (48) are generally shaped as a cylinder, the diameter of which is smaller than the diameter of the filter element (29) and which extends generally parallel to the axis of said filter element (29) over the perforate portion thereof.

6. An air filtering arrangement according to claim 5 characterized in that the brush means (48) comprise a hollow core provided with exteriorly extending bristles, dimensioned such that, during cleaning engagement, these bristles are operable to penetrate into the perforations of the filter section exposed to the brush means (48) thereby expelling foreign matter from said perforations in a direction opposite to the direction of entrance of said foreign matter.

7. An air filtering arrangement according to claim 5 or 6 characterized in that the brush means (48) are freely rotatably mounted and are rotatably driven by engagement thereof with the filter element (29).

8. An air filtering arrangement according to any of the claims 3 to 7 characterized in that a filter element cleaning air blast is oriented generally parallel to and closely adjacent a section of the filter element (29) at the side thereof facing away from and in the region of the blanking off means (38); the cleaning air blast being operable to remove foreign matter from said section in said parallel direction and to discharge the removed foreign matter remote from the filter element (29).

9. An air filtering arrangement according to claim 8 characterized in that duct means (44) are provided in the vicinity of the filter element (29) and which are open towards said filter element (29) in the region of the blanking off means (38); the duct means being operable to channel the cleaning air blast in said generally parallel direction relative to and closely adjacent said section of the filter element (29) and the arrangement being such that foreign matter, expelled from the filter perforations by the cleaning action of the brush means (48), is blanked off by the blanking off means (38) from the air drawn into the filter element (29) by the fan (18) and is captured by the cleaning air blast in the duct means (44) through the open portion thereof for being discharged at a location remote from the filter element.

10. An air filtering arrangement according to any of the claims 5 to 9 characterized in that the drive means for the filter element (29) comprises either a belt (36) in driving engagement with the cylindrical surface of the filter element (29) or turbine blades coupled to said filter element (29) whereby, in use, the filter element (29) is driven by the flow of air therethrough as drawn by the fan (18).

11. A harvesting machine characterized in that it comprises an air filtering arrangement (14) in accordance with any of the claims 1 to 10.

## Patentansprüche

1. Luftfilterungsanordnung mit:
- einem perforierten Filterelement (29),
- einem Gebläse (18), das betreibbar ist, um Luft, die mit Fremdstoffen verunreinigt ist, in einer vorgegebenen Richtung durch das Filterelement (29) von dessen strömungsaufwärts gelegenen Seite zu dessen strömungsabwärts gelegenen Seite zu drücken, wobei das Filterelement (29) betreibbar ist, um die Fremdstoffe festzuhalten, während die Luft durch die Perforationen des Filterelementes hindurchströmt,
- einer Filterelement-Reinigungseinrichtung (46), die eine drehbare Bürsteneinrichtung (48) aufweist, die in Reinigungseingriff mit einem Abschnitt des Filterelementes (29) steht, um um von diesem festgehaltene Fremdstoffe abzulösen, und
- Antriebseinrichtungen (36/.), die dazu dienen, um im Betrieb die Relativstellung des Filterelementes (29) bezüglich der Bürsteneinrichtung (48) derart zu ändern, daß andere Abschnitte des Filterelementes aufeinanderfolgend den Bürsteneinrichtungen (48) ausgesetzt sind,
dadurch gekennzeichnet, daß die Bürsteneinrichtungen (48) auf der strömungsabwärts gelegenen Seite des Filterelementes (29) angeordnet sind und derart betreibbar sind, daß sie durch die Perforationen des Filterelementes in einer Richtung hindurchstechen, die der vorgegebenen Richtung entgegengesetzt ist, so daß Fremdstoffe, die sich in den Perforationen angesammelt haben, in Richtung auf die strömungsaufwärts gelegene Seite des Filterelementes (29) ausgestoßen werden.

2. Luftfilterungsanordnung nach Anspruch 1,
dadurch gekennzeichnet, daß das Gebläse (18) und die Bürsteneinrichtungen (48) auf der gleichen Seite des Filterelementes (29) angeordnet sind, wobei das Gebläse (18) zum Hindurchsaugen von Luft durch das Filterelement betreibbar ist.

3. Luftfilterungsanordnung nach Anspruch 2,
dadurch gekennzeichnet, daß:
- Abdeckeinrichtungen (38) eng benachbart zum Filterelement (29) auf dessen in Richtung des Gebläses (18) zeigender Seite angeordnet sind, um die Perforationen in diesem Filterelement (29) über einen vorgegebenen Bereich abzudecken, so daß der Durchgang von zu filternder Luft durch diesen Bereich verhindert wird, und
- die Bürsteneinrichtungen (48) eng benachbart zu den Abdeckeinrichtungen (38) angeordnet sind.

4. Luftfilterungsanordnung nach Anspruch 3,
dadurch gekennzeichnet, daß:
- das Filterelement (29) durch die Antriebseinrichtungen (36/.) in Drehung angetrieben ist,
- die Abdeckeinrichtungen (38) stationär sind und im Betrieb aufeinanderfolgende Abschnitte des Filterelementes (29) abdecken, und
- die Bürsteneinrichtungen (48) im Betrieb stationär vor den Abdeckeinrichtungen (38) bei Betrachtung in Drehrichtung des Filterelementes (29) angeordnet sind.

5. Luftfilterungsanordnung nach Anspruch 3 oder 4,
dadurch gekennzeichnet, daß:
- das Filterelement (29) eine allgemein zylindrische Form aufweist und um seinen Umfang herum über zumindestens einen Teil seiner axialen Länge mit Perforationen versehen ist,
- das Gebläse (18) zum Einsaugen von zu filternder Luft von der Außenseite des Filters (29) durch das Filterelement (29) hindurch zu dessen Innenseite betreibbar ist,
- die Abdeckeinrichtungen (38) stationär innerhalb des Filterelementes angeordnet sind und sich über einen Bogen des perforierten Umfanges des Filterelementes (29) und eng benachbart hierzu erstrecken, und
- die Bürsteneinrichtungen (48) allgemein die Form eines Zylinders aufweisen, dessen Durchmesser kleiner als der Durchmesser des Filterelementes (29) ist, und der sich allgemein parallel zur Achse des Filterelementes (29) über dessen perforierten Bereich erstreckt.

6. Luftfilterungsanordnung nach Anspruch 5,
dadurch gekennzeichnet, daß die Bürsteneinrichtungen (48) einen hohlen Kern mit sich nach außen erstreckenden Borsten umfassen, die derart bemessen sind, daß während des Reinigungseingriffes diese Borsten so betreibbar sind, daß sie in die Perforationen des den Bürsteneinrichtungen (48) ausgesetzten Filterabschnittes eindringen, wodurch Fremdstoffe aus den Perforationen in einer Richtung ausgestoßen werden, die entgegengesetzt zur Eintrittsrichtung dieser Fremdstoffe ist.

7. Luftfilterungsanordnung nach Anspruch 5 oder 6,
dadurch gekennzeichnet, daß die Bürsteneinrichtungen (48) frei drehbar befestigt sind und durch ihren Eingriff mit dem Filterelement (29) in Drehung angetrieben werden.

8. Luftfilterungsanordnung nach einem der Ansprüche 3 - 7,
dadurch gekennzeichnet, daß ein Reinigungsluftstrom für das Filterelement allgemein parallel zu und eng benachbart zu einem Abschnitt des Filterelementes (29) an der Seite ausgerichtet ist, die von den Abdeckeinrichtungen (38) fort gerichtet ist und sich in deren Bereich befindet, wobei der Reigigungsluftstrom betätigbar ist, um Fremdstoffe von dem Abschnitt in dieser parallelen Richtung zu entfernen und die entfernten Fremdstoffe an einer von dem Filterelement (29) entfernt gelegenen Stelle abzugeben.

9. Luftfilterungsanordnung nach Anspruch 8,
dadurch gekennzeichnet, daß Kanaleinrichtungen (44) in der Nähe des Filterelementes (29) angeordnet sind und in Richtung auf das Filterelement (29) in dem Bereich der Abdeckeinrichtungen (38) offen sind, daß die Kanaleinrichtungen zur Führung des Reinigungsluftstroms in der allgemein parallelen Richtung relativ zu und eng benachbart zu dem Abschnitt des Filterelementes (29) zu führen, und daß die Anordnung derart ist, daß die Fremdstoffe, die aus den Filterperforationen durch die Reinigungswirkung der Bürsteneinrichtungen 848) ausgestoßen werden, von den Abdeckeinrichtungen (38) gegenüber der Luft abgeschirmt werden, die von dem Gebläse (18) in das Filterelement (29) eingesaugt wird, wobei die Fremdstoffe von dem Reinigungsluftstrom in den Kanaleinrichtungen (48) durch deren offenen Teil hindurch aufgefangen werden, um an einer von dem Filterelement entfernten Stelle abgegeben zu werden.

10. Luftfilterungsanordnung nach einem der Ansprüche 5 - 9,
dadurch gekennzeichnet, daß die Antriebseinrichtungen für das Filterelement (29) entweder einen Riemen (36) in Antriebseingriff mit der zylindrischen Oberfläche des Filterelementes (29) oder Turbinenschaufeln umfassen, die mit dem Filterelement (29) gekoppelt sind, so daß im Betrieb das Filterelement (29) durch die Strömung der Luft angetrieben wird, die von dem Gebläse (18) durch das Filterelement hindurchgesaugt wird.

11. Erntemaschine,
dadurch gekennzeichnet, daß sie eine Filteranordnung (14) gemäß einem der Ansprüche 1 bis 10 umfaßt.

## Revendications

1. Dispositif de filtration d'air comportant :
- un élément formant filtre perforé (29) ;
- un ventilateur (18) apte à agir pour obliger de l'air contaminé par des corps étrangers à passer dans un sens donné à travers l'élément formant filtre (29) d'un côté amont à un côté aval de celui-ci ; ledit élément formant filtre (29) étant apte à agir pour retenir lesdits corps étrangers lorsque l'air passe à travers ses perforations ;
- des moyens de nettoyage d'élément formant filtre (46) comprenant un moyen formant balai rotatif (48) disposé en contact de nettoyage avec une section de l'élément formant filtre (29) pour libérer les corps étrangers retenus par celui-ci ; et
- des moyens d'entraînement (36/.) pour, en service, faire varier la position relative de l'élément formant filtre (29) par rapport au moyen formant balai (48) afin que d'autres sections de l'élément formant filtre soient successivement exposées au moyen formant balai (48) ; et
caractérisé en ce que :
le moyen formant balai (48) est positionné au niveau du côté aval de l'élément formant filtre (29) et est apte à agir pour passer à travers lesdites perforations de l'élément formant filtre dans un sens opposé audit sens donné pour ainsi expulser les corps étrangers accumulés dans lesdites perforations en direction du côté amont de l'élément formant filtre (29).

2. Dispositif de filtration d'air selon la revendication 1, caractérisé en ce que le ventilateur (18) et le moyen formant balai (48) sont positionnés du même côté de l'élément formant filtre (29) ; le ventilateur (18) étant apte à agir pour aspirer de l'air à travers celui-ci.

3. Dispositif de filtration d'air selon la revendication 2, caractérisé en ce que :
- un moyen formant cache (38) est prévu tout près de l'élément formant filtre (29) au niveau du côté de celui-ci tourné dans la direction du ventilateur (18) pour cacher les perforations définies dans cet élément formant filtre (29) sur une zone prédéterminée afin d'empêcher le passage à travers celle-ci de l'air destiné à être filtré, et
- le moyen formant balai (48) est positionné tout près du moyen formant cache (38).

4. Dispositif de filtration d'air selon la revendication 3, caractérisé en ce que :
- l'élément formant filtre (29) est entraîné en rotation par les moyens d'entraînement (36/.) ;
- le moyen formant cache (38) est fixe et, en service, cache des sections successives de l'élément formant filtre (29) ; et
- le moyen formant balai (48) est, en service, positionné d'une manière fixe en amont du moyen formant cache (38), lorsqu'on le considère dans le sens de rotation de l'élément formant filtre (29).

5. Dispositif de filtration d'air selon la revendication 3 ou 4, caractérisé en ce que :
- l'élément formant filtre (29) a une configuration, dans l'ensemble, cylindrique et est perforé autour de sa périphérie sur une partie au moins de sa longueur axiale ;
- le ventilateur (18) est apte à agir pour aspirer l'air destiné à être filtré de l'extérieur vers l'intérieur de l'élément formant filtre (29) à travers celui-ci ;
- le moyen formant cache (38) est disposé d'une manière fixe à l'intérieur de l'élément formant filtre et s'étend sur un arc de la périphérie perforée de l'élément formant filtre (29) et tout près de celle-ci ; et
- le moyen formant balai (48) se présente, d'une manière générale, sous la forme d'un cylindre dont le diamètre est inférieur au diamètre de l'élément formant filtre (29) et qui s'étend, d'une manière générale, parallèlement à l'axe dudit élément formant filtre (29) sur la partie perforée de celui-ci.

6. Dispositif de filtration d'air selon la revendication 5, caractérisé en ce que le moyen formant balai (48) comporte un noyau creux pourvu de poils qui s'étendent vers l'extérieur et qui sont dimensionnés pour, pendant un contact de nettoyage, pouvoir pénétrer dans les perforations de la section du filtre exposée au moyen formant balai (48) pour ainsi expulser les corps étrangers desdites perforations dans un sens opposé au sens dans lequel ces corps étrangers sont entrés.

7. Dispositif de filtration d'air selon la revendication 5 ou 6, caractérisé en ce que le moyen formant balai (48) est monté pour pouvoir tourner librement et est entraîné en rotation grâce à son contact avec l'élément formant filtre (29).

8. Dispositif de filtration d'air selon l'une quelconque des revendications 3 à 7, caractérisé en ce qu'un souffle d'air de nettoyage d'élément formant filtre est orienté, d'une manière générale, parallèlement à une section de l'élément formant filtre (29) et situé tout près de celle-ci, du côté de l'élément formant filtre dirigé à distance du moyen formant cache (38) et dans la zone de celui-ci ; le souffle d'air de nettoyage étant apte à agir pour éliminer les corps étrangers de ladite section dans ladite direction parallèle et pour évacuer les corps étrangers éliminés à distance de l'élément formant filtre (29).

9. Dispositif de filtration d'air selon la revendication 8, caractérisé en ce qu'un moyen formant conduit (44) est prévu au voisinage de l'élément formant filtre (29) et ouvert en direction dudit élément formant filtre (29) dans la zone du moyen formant cache (38); le moyen formant conduit étant apte à agir pour canaliser le souffle d'air de nettoyage dans ladite direction sensiblement parallèle par rapport à ladite section de l'élément formant filtre (29) et tout près de celle-ci, et la conception étant telle que les corps étrangers expulsés des perforations du filtre par l'action de nettoyage du moyen formant balai (48), sont masqués par le moyen formant cache (38) vis-à-vis de l'air aspiré dans l'élément formant filtre (29) par le ventilateur (18) et captés par le souffle d'air de nettoyage dans le moyen formant conduit (44) à travers la partie ouverte de celui-ci pour être évacués en un emplacement éloigné de l'élément formant filtre.

10. Dispositif de filtration d'air selon l'une quelconque des revendications 5 à 9, caractérisé en ce que les moyens d'entraînement prévus pour l'élément formant filtre (29) comprennent une courroie (36) en contact d'entraînement avec la surface cylindrique de l'élément formant filtre (29) ou des ailettes de turbine reliées audit élément formant filtre (29) pour qu'ainsi, en service, l'élément formant filtre (29) soit entraîné par le courant d'air aspiré à travers lui par le ventilateur (18).

11. Machine à moissonner caractérisée en ce qu'elle comporte un dispositif de filtration d'air (14) conforme à l'une quelconque des revendications 1 à 10.
